# EUROPEAN PATENT SPECIFICATION

(11) **EP 0 368 374 B1**
(45) Date of publication and mention of the grant of the patent: **06.04.1994**
(21) Application number: 89202546.1
(22) Date of filing: 10.10.1989
(51) Int. Cl.: F03D 7/02

(54) **Windmill**
Windmotor
Eolienne

(30) Priority: 11.10.1988 NL 8802485
(43) Date of publication of application: 16.05.1990
(73) Proprietor: van der Sterren, Martin Leonard, NL-6042 CV Roermond (NL); Vandalon, Franciscus Pancratius Maria, NL-6051 AK Maasbracht (NL)
(72) Inventor: van der Sterren, Martin Leonard, NL-6042 CV Roermond (NL); Vandalon, Franciscus Pancratius Maria, NL-6051 AK Maasbracht (NL)

(56) References cited:
- EP-A- 0 009 052
- US-A- 2 516 576
- US-A- 4 632 637

## Description

The invention relates to a windmill comprising a rotatable shaft and at least one rotor blade hinged to the rotatable shaft and extending mainly normal to the axis of rotation of said shaft.

A windmill of this kind is known from European Patent Application 0100.031. This known windmill is equiped with a rotor blade that is connected to the rotatable shaft by means of an cardan joint, while opposite to the rotor blade a counterweight is mounted. The cardan joint allows the wind to push the rotor blade away from the plane which is perpendicular to the rotation axis of the shaft, until the rotor-blade reaches an equilibrium in another surface of revolution. The position of equilibrium is determined by the wind force, the mass of the blade, including the counterweight, and the speed of rotation.

A disadvantage of this known windmill is that under changing wind conditions a rather large variation occurs in the angle between the rotor blade and the axis of rotation of the shaft, and that mechanical stresses in the rotor blade are relatively high.

The object of the invention is to obviate this disadvantage and to provide a windmill that smoothly copes with variations of the wind velocity, such that stresses in the blade are. reduced as much as possible.

This object is attained in that a first end of the rotor blade is hinged to an end surface of the rotatable shaft by means of a first hinge and in that a rigid connecting member on one end thereof, is hinged to the end surface of the rotatable shaft by means of a second hinge and, on the other end thereof, is hinged to the rotor blade by means of a third hinge, which third hinge is situated at said first end of each rotor blade at a distance from the first hinge.

As a result thereof, also the driving force of the windmill influences the interplay of forces, which interplay results, under changing wind force, in a new equilibrium at another surface of revolution . The reaction force that is transmitted to the rotor blade by means of the rigid connecting member appears to have a considerable impact on limitating the deviation of the rotor blade out of the original surface of revolution. Furthermore, this reaction force is an important factor in smoothly altering the position of the rotor blade in a state of equilibrium in dependency to the prevailiry wind force.

Preferably, the hinges are constructed as ball joints, which are reliable components that have shown to be durable under all weather conditions.

The invention will be explained in detail in the following description with reference to the associated drawings, in which:
Fig. 1 is a schematic represention of a two blade windmill according to the invention and
Fig.2 is a side view of the windmill, represented in Fig. 1.

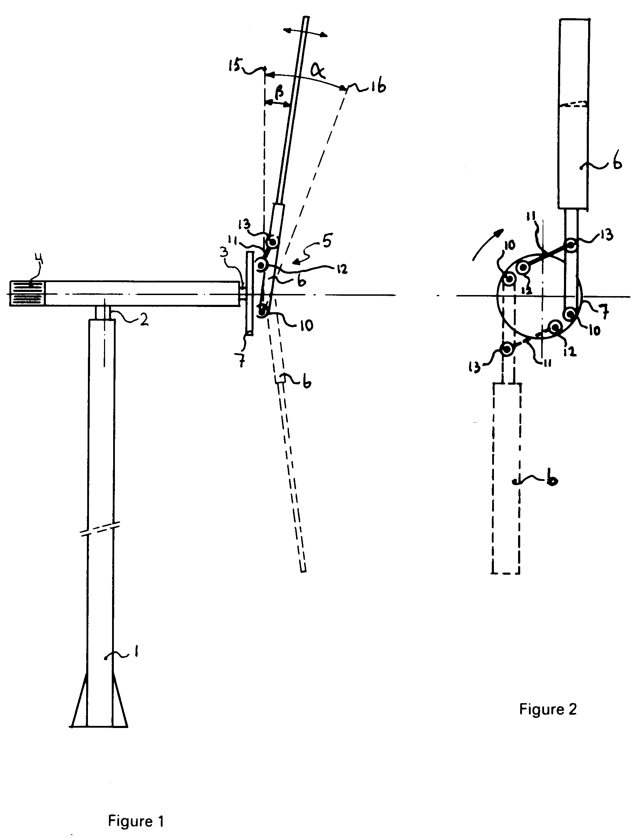

The windmill according Figures 1 and 2 comprises of a vertical frame 1 on to which a main shaft 3 is rotatably mounted by means of a turning bearing 2.

As usual, a generator 4 with accompanying gearbox is connected to this main shaft 3, while the blade system 5 is mounted on the main shaft 3 at the lee-side of the windmill. Preferably the blades are placed at the lee-side of the windmill to avoid a construction for turning the windmill to face the wind. However, the blade system 5 can also be situated at the weather-side.

The blade system 5, comprising two blades 6, is connected to a plate 7 which is rigidly mounted on the main shaft 3. Each blade 6 is mounted on plate 7 by means of a hinge construction having a high degree of freedom, i.e. a ball joint 10.

Furthermore, a rigid connecting member, formed by a bar 11, is connected between the plate 7 and a portion of each rotor blade 6 which is at some distance from the balljoint 10. The connections of the bar 11 with the plate 7 and with each rotor blade 6 are also realised by ball joints 12, 13.

By this construction it is achieved that, in dependency of the prevailing wind force, in a state of equilibrium, a position of the rotor blades 6 is reached that lies between extreme positions of the rotor blades 6, indicated as 15 and 16 in Fig. 1. The state of equilibrium of a rotor blade is determined by a balance of the following forces: the impulsive force of the prevailing wind on the rotor blades, the centrifugal force caused by the mass of the blade and the reaction force exerted by bar 11 due to the driving torque of the windmill. It appears that especially the reaction force, which is due to the driving torque, is an important factor in the balance of forces which keeps the deviation angle α between the surface of revolution of the rotor blades and the plane perpendicular to the rotating axis of shaft 3 within reasonable limits over the whole range of variation of the wind force.

In practice the deviation angle α will at most reach 20°, while the operating angle β appears to be around 8°.

It appears that the windmill according to the invention is capable of smoothly coping with sudden changes in the wind force, without exerting heavy loads on the frame of the windmill.

As usual for windmills of this type the rotor blades are rotatable around their own axis in order to vary the angle of the blade in relation to the direction of the wind. This rotation can easily be realised by ball joints. However, the latter is not illustrated.

The windmill described above can further be provided with stop elements in order to prevent an excessive deviation of the blades when the windmill is not in operation.

## Claims

1. Windmill comprising a rotatable shaft (3) and at least one rotor blade (6) hinged to the rotatable shaft (3) and extending mainly perpendicular to the axis of rotation of said shaft (3), characterized in that a first end of each rotor blade (6) is hinged to an end surface (7) of the rotatable shaft (3) by means of a first hinge (10), and in that a rigid connecting member (11), on one end thereof, is hinged to the end surface (7) of the rotatable shaft (3) by means of a second hinge (12) and, on the other end thereof, is hinged to the rotor blade (6) by means of a third hinge (13), which third hinge (13) is situated at said first end of each rotor blade at a distance from the first hinge (10).

2. Windmill according to claim 1, characterized in that the hinges (10, 12, 13) are constructed as ball joints.

## Patentansprüche

1. Windmotor der eine Rotornabe (3) und wenigstens ein Rotorblatt (6) aufweißt, welches Rotorblatt (6) gelenkig mit der Rotornabe (3) ist verbunden und sich im wesentlichten senkrecht zur Rotornabe (3) erstreckt,
dadurch gekennzeichnet daß das erste Ende jedes Rotorblatts (6) durch einer ersten Gelenkkupplung (10) mit einer Endfläche (7) der Rotornabe (3) ist verbunden, und daß ein Ende eines festen Verbindungsstücks (11) durch einer zweiten Gelenkkupplung (12) mit der Endfläche (7) der Rotornabe (3) ist verbunden (11) und daß das andere Ende des Verbindungsstücks (11) durch einer dritten Gelenkkupplung (13) mit dem Rotorblatt (6) ist verbunden, wobei die dritte Gelenkkupplung (13) sich auf dem ersten Ende jedes Rotorblatts in einiger Entfernung der ersten Gelenkkupplung (10) befindet.

2. Windmotor nach Ansprucht 1,
dadurch gekennzeichnet,
daß die Gelenkkupplungen (10, 12, 13) ausgeführt sind wie Kugelgelenke.

## Revendications

1. Eolienne comprenant un arbre rotatable (3) et au moins une lame rotor (6) qui est monté sur l'arbre par une accouplement articulé et qui ce étende essentiellement perpendiculaire sur l'axe de rotation de l'arbre (3),
caractérisé en ce que une première extrémité de chaque lame rotor (6) est monté par un premier point d'articulation (10) sur la face extrême de l'arbre (3), et que l'un des extrémités d'une partie de raccordement fixe (11) est monté sur la face extrême de l'arbre par un deuxième point d'articulation (12) et l'autre extrémité du partie de raccordement (11) est monté par un troisième point d'articulation (13) sur la lame rotor (6), quel troisième point d'articulation (13) est situé près de la première extrémité de la lame rotor (6) a une distance du premier point d'articulation (10).

2. Eolienne suivant la revendication 1, caractérisé en ce que les points d'articulation (10, 12, 13) sont réalisés comme des joints à billes.
